# EUROPEAN PATENT APPLICATION

(11) **EP 1 525 803 A1**
(43) Date of publication of application: **27.04.2005**
(21) Application number: 03425686.7
(22) Date of filing: 22.10.2003
(51) Int. Cl.: A23G 7/02, A47F 3/04, F25B 21/02

(54) **Preservation in a cooled condition and display of loose confectionery products which can be damaged by heat**

(71) Applicant: SOREMARTEC S.A., 6700 Schoppach-Arlon (BE); Ferrero S.p.A., 12051 Alba (Cuneo) (IT); Ferrero Offene Handelsgesellschaft m.b.H., 60599 Frankfurt/Main 70 (DE)
(72) Inventor: Mansuino, Sergio, 12084 Mondovi (Cuneo) (IT)
(74) Representative: Rambelli, Paolo

(57) **Abstract**

A method for the preservation in a cooled condition of loose confectionery products which can be damaged by heat, for the purpose of permitting the retail sale thereof, is described. The products (P) are displayed, preferably loose, in a cooled container (2, 12) into which an air-flow cooled by the Peltier effect is supplied by means of a fan (40) disposed outside the container (12), through at least one opening (42) in the bottom (18, 24) of the container (12), and is caused to flow continuously through the tortuous passageways between the products (P) contained therein, the air-flow being at least partially extracted from the container and caused to flow, without exchange of matter with the exterior, in contact with a cold dissipator element (32) of a Peltier-effect thermoelectric module (28) disposed on the intake side of the fan (40). A Peltier-effect cooling device for implementing the method is also described.

## Description

The present invention relates to a method for the preservation in a cooled condition of loose confectionery products which can be damaged by heat, for the purpose of promoting the retail sale of such products, even during hot periods.

The invention also relates to a cooling device, particularly for a bar or counter, which is useful for the cooling and display of the above-mentioned confectionery products and to its use for the above-mentioned purposes.

The confectionery products to which the invention relates are products in general which are subject to deterioration of their organoleptic and structural properties when they are exposed to heat, for example, to temperatures above 25-26°C, for more or less extended periods of time and include, but are not limited to:
- pralines, optionally including a creamy or liquid, possibly hydrated, filling,
- pralines with wafer shells coated externally with chocolate or the like and optionally including a filling of the above-mentioned type, and
- confectionery products in general, including: a filling having a liquid, creamy or pasty consistency at ambient temperature (25°C) and possibly a covering (coating) with an unfinished product having a liquid, creamy or pasty consistency at ambient temperature (25°C).

More generally, the products concerned are products the organoleptic characteristics of which are best at temperatures of between 15 and 25°C and which are intended to be consumed at these temperatures.

These products undergo substantial deterioration of their organoleptic properties when they are exposed to temperatures generally above 26°C; with reference to products containing chocolate, the typical deterioration phenomenon is due to softening with consequent blooming of fats which occurs at temperatures of the order of 27-28°C or above.

With reference to filled products, in particular with hydrated or liquid fillings in general, the tendency of the filling to evaporate as a result of exposure to heat leads to an unacceptable deterioration of the product.

For the reasons set out above, the retail sale of the above-mentioned products is generally limited to periods that are characterized by a temperate climate whereas, in summer, it is necessary to withdraw these products from sale both to prevent their deterioration and, for commercial reasons, to prevent the sale of products that may have deteriorated giving rise to dissatisfaction on the part of the consumer, thus damaging the image of the product.

The problem of the retail marketing of these products in hot periods has not yet been solved successfully. The preservation of such products in a refrigerated environment is clearly not satisfactory both because conventional refrigerators are not arranged to maintain a temperate range of temperatures, which is necessary for these products, and because preservation in a refrigerated environment, which does not make the product visible, is not suitable for promoting its sale.

Moreover, preservation in a refrigerated environment, which is generally at temperatures of between 2 and 8°C, causes the products not to be suitable for consumption immediately after they have been removed from the refrigerator.

To overcome the above-mentioned problems, a subject of the invention is a method for the preservation in a cooled condition of loose confectionery products which can be damaged by heat, for the purpose of permitting the retail sale thereof, characterized in that the products are displayed, preferably loose, in a cooled container into which a flow of cooled air is supplied, by means of a fan disposed outside the container, through openings in the bottom of the container, and is caused to flow continuously through the tortuous passageways between the products, the air-flow being at least partially extracted from the container in order to be caused to flow (without exchange of matter with the outside environment) in contact with a cold dissipator element (for example, of a Peltier-effect thermoelectric module) disposed on the intake side of the fan.

Another subject of the invention is a device suitable for implementing the above-described method, intended particularly for cooling and displaying loose confectionery products which can be damaged by heat and comprising:
- a base container including in its interior a thermoelectric module, interposed between a heat dissipator element and a cold dissipator element,
- a first fan and a second fan adjacent the hot-side dissipator and the cold-side dissipator, respectively, for generating air-flows flowing in contact with the dissipators, and
- an upper container arranged for containing and for displaying the confectionery products, the container having a bottom wall associated with the base container so as to define in the base container a lower chamber in which the heat dissipator and the respective at least one fan are housed, the lower chamber communicating with the atmosphere through at least one first opening defined between the upper edge of the mouth of the base container and the side wall and/or the bottom wall of the upper container, and through at least one second opening formed in the bottom of the base container, so that the operation of the fan brings about an air-flow flowing in contact with the heat dissipator from the first opening to the second opening, and in which the bottom wall of the upper container defines a second chamber which is not in communication with the first chamber and which includes in its interior the cold dissipator and the respective fan, the said chamber communicating with the interior of the upper container through at least one first opening adjacent the output side of the fan and at least one second opening adjacent the intake side of the fan, so that the operation of the fan produces a cooled air-flow circulating inside the upper container and flowing in the second chamber from the second opening to the first opening.

Further characteristics and advantages of the method and of the apparatus according to the invention will become clear from the following detailed description which is given with reference to the appended drawing, in which:

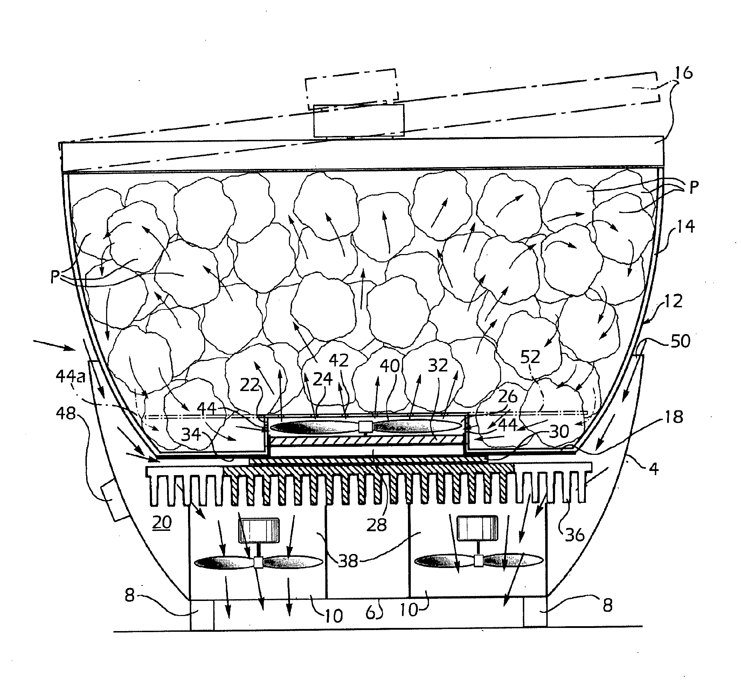

Figure 1 is a schematic view showing a device according to the invention in vertical section.

The drawing shows a cooling device 1 for a bar or counter, arranged for the display and cooling of confectionery products P.

The device comprises a base container 2 preferably having a cup-like or bowl-like shape with a side wall 4 and a bottom wall 6. The bottom wall 6 is supported on one or more support elements 8 so that it is raised from the supporting surface and has one or more openings 10 which put the interior of the base container into communication with the outside environment.

An upper container for containing and displaying the confectionery products P is indicated 12. The upper container has a side wall 14, preferably made of transparent material, and preferably has a lid 16 which is preferably transparent and removable or hinged to the body of the container.

A bottom wall 18 of the upper container 12 defines, with the base container 2 and in the interior thereof, a chamber 20. The bottom wall 18 preferably has a recess delimited by a side wall 22 and an upper wall 24 which project towards the interior of the upper container 12. The recess, delimited by the walls 22 and 24, also defines a chamber 26 which is thermally insulated and is not in communication with the chamber 20 of the base container 2.

A Peltier-effect thermoelectric module 28, known *per se,* is disposed in the base container 2 and is formed by a matrix of pairs of semiconductors sandwiched between a lower dissipator 30 (hot plate) and an upper dissipator 32 (cold plate) which is optionally finned. The Peltier module 28 is surrounded by a thermally insulating element 34 in layer form.

Further characteristics of the Peltier thermoelectric module such as, for example, spacer elements and metallization layers are not shown since they are conventional characteristics that are known *per se.*

A conventional finned heat dissipator (for example, made of aluminium), indicated 36, is positioned between the heat dissipator 30 (or hot plate) and one or more electrically-operated fans 38 supported on the bottom wall 6 of the base container 2. A further fan 40 is positioned in the chamber 26, adjacent the cold dissipator 32.

The chamber 26 defined by the bottom 18 of the upper container 12 has in its upper wall 24 a plurality of openings 42 which put the chamber 26 into communication with the interior of the upper container 12; openings 44, which are preferably slot-shaped, are also positioned in the side walls 22 delimiting the chamber 26.

The bottom of the upper container 12 is mounted in a leaktight manner, bearing on the thermally insulating element 34, so that the chamber 26 is separated from the lower chamber 20.

When a direct current is applied to the Peltier module by means of an electrical connection 48 (the internal electrical connections are not shown) heat is absorbed by the dissipator 32, which is cooled, whilst heat is dissipated by the lower dissipator 30, which is heated. The finned dissipator 36 favours the further dissipation of heat.

The electrical supply to the device also operates the fans 38 and 40.

The upper container 12 defines, with the upper edge of the side wall 4 of the base container 2, at least one opening 50 which allows air from the outside environment to enter the chamber 20. The opening 50 is preferably an annular opening adjacent the profile of the upper edge of the wall 4 but may also be constituted by a plurality of angularly spaced-apart openings arranged in a ring.

The operation of the fan or fans 38 causes air to enter from the opening/s 50, producing a flow which flows in contact with the finned heat dissipator 36 and which emerges from the chamber 20 through the openings 10 in the bottom wall 6.

The operation of the fan 40 produces an air-flow which emerges from the chamber 26 through the openings 42 in the upper wall 24 and which flows through the spaces between the products P that are disposed in the upper container 12. The air-flow is at least partially recirculated inside the chamber 26 through the openings 44 formed in the side walls 22 of the chamber 26 and adjacent the intake side of the fan 40. The air-flow flowing through the chamber 26 is cooled in contact with the cold dissipator 32.

The presence of food products P arranged loosely in the container 12 in fact promotes the recirculation of the air-flow from inside the upper container 12 through the openings 44 into the chamber 26, even when the container 12 is open at the top.

Typically, the temperature inside the container 12 is kept within the range of between 15 and 25°C, preferably between 18 and 22°C, temperature-control means optionally being provided to permit thermostatic control of the desired temperature.

The cooling device is intended particularly for use at retail points of sale of the confectionery products where the products can be displayed inside the container in a cooled condition, so as to promote their purchase.

From the aesthetic point of view, the container may adopt various configurations suitable for attracting the consumer's attention. A preferred configuration in relation to the preservation and sale of pralines is that in which the base container 2 has a bowl-like shape similar to the paper cups in which the pralines are normally inserted, in particular, a bowl-like shape with grooved or pleated side walls; the upper container 2 in this case can preferably adopt a configuration similar to that of the confectionery product contained therein.

Naturally, although the structure of the Peltier-effect cooling means has been described schematically herein, the invention is intended to extend to any cooling means suitable for achieving the above-described functional results.

For example, although in the embodiment shown, the cooling means do not comprise a finned dissipator on the cold side, such a dissipator may be used if desired, thus being arranged between the fan 40 and the cold dissipator 32; alternatively, the cold dissipator 32 may itself be finned.

Naturally, the principle of the invention remaining the same, the forms of embodiment and details of construction may be varied widely with respect to those described and illustrated by way of non-limiting example, without departing from the scope of the appended claims.

Thus, for example, the chamber 26 may have a configuration other than that described above; the chamber 26 may be defined at the bottom by the bottom wall 18 of the upper container and at the top by a transverse partition (indicated partially in broken outline and indicated 52 in the drawing) disposed above the fan 40 and having, in the region disposed above the fan, openings such as the openings 42 which put the chamber 26 into communication with the interior of the upper container 12, and peripheral openings 44a functionally similar to the openings 44 in the region of the partition that is adjacent the wall 14.

## Claims

1. A method for the preservation in a cooled condition of loose confectionery products which can be damaged by heat, for the purpose of permitting the retail sale thereof, **characterized in that** the products (P) are displayed, preferably loose, in a cooled container (2, 12) into which a flow of cooled air is supplied by means of a fan (40) disposed outside the container (12), through at least one opening (42) in the bottom (18, 24) of the container (12), and is caused to flow continuously through the tortuous passageways between the products (P) contained therein, the air-flow being at least partially recovered from the container and caused to flow in contact with a cold dissipator element (32) of a thermoelectric module (28) disposed on the intake side of the fan (40).

2. A method according to Claim 1 in which the air-flow is cooled so as to maintain a temperature of between 15 and 25°C, preferably between 18 and 22°C, inside the container (12).

3. A method according to Claim 1 or Claim 2, **characterized in that** the loose confectionery products (P) disposed inside the container (12) comprise pralines having a wafer shell coated with chocolate or the like, pralines having a chocolate shell or the like, or such pralines including a liquid, creamy or pasty, optionally hydrated, filling.

4. A cooling device, particularly for cooling and displaying loose confectionery products (P) which are subject to damage by heat, comprising:
- a base container (2) including in its interior a thermoelectric module (28) interposed between a heat dissipator (30, 36) and a cold dissipator (32),
- at least one first fan (38) and one second fan (40) adjacent the heat dissipator (30, 36) and the cold dissipator (32), respectively, for generating air-flows flowing in contact with the said dissipators, and
- an upper container (12) arranged for containing and for displaying the confectionery products (P), the upper container (12) being associated with the base container (2) so as to define a lower chamber (20) in which the heat dissipator (30, 36) and the respective at least one fan (38) are housed, the lower chamber (20) communicating with the atmosphere through at least one first opening (50) defined between the upper edge of the mouth of the base container (2) and the side wall (14) and/or the bottom wall (18) of the upper container (12), and through at least one second opening (10) formed in the bottom (18) of the base container (2), so that the operation of the fan brings about an air-flow flowing in contact with the heat dissipator (30, 36) from the first opening (50) to the at least one second opening (10),
the bottom wall (18) of the upper container (12) defining a second chamber (26) which is not in communication with the first chamber (20) and which includes in its interior the cold dissipator (32) and the respective fan (40), the second chamber (26) communicating with the interior of the upper container (12) through at least one first opening and one second opening (42, 44) so that the operation of the fan (40) in the second chamber (26) produces an air-flow circulating inside the upper container (12) and flowing in the chamber (26) from the second opening (44) to the first opening (42).

5. A cooling device according to Claim 4, **characterized in that** the second chamber (26) is defined by a recess in the bottom wall (18) of the upper container (12), which recess is delimited by a side wall (22) in which a plurality of the second openings (44) are formed, and by an upper wall (24) having the first openings (42), the side wall (22) and the upper wall (24) projecting inside the upper container (12).

6. A cooling device according to Claim 4, **characterized in that** the second chamber (26) is delimited at the bottom by the bottom wall (18) of the upper container (12) and at the top by a transverse partition (52) disposed above the fan (40) associated with the cold dissipator (32).

7. A device according to any one of Claims 4, 5 and 6, **characterized in that** the second chamber (26) is delimited at the bottom by a layer of thermally insulating material (34) surrounding the thermoelectric module (28) and superimposed on the heat dissipator (30).

8. A cooling device according to any one of Claims 4 to 7, **characterized in that** the at least one first opening (50) for allowing ambient air to enter the chamber (20) of the base container (2) is an annular opening (50) defined between the upper edge of the side wall (4) of the base container (2) and the bottom wall (18) and/or side wall (14) of the upper container (12).

9. A cooling device according to any one of Claims 4 to 8, **characterized in that** the heat dissipator comprises a finned dissipator (36).

10. A cooling device according to any one of Claims 4 to 8, **characterized in that** the cold dissipator (32) comprises a finned dissipator.

11. Use of a cooling device according to any one of Claims 4 to 10 for cooling and displaying confectionery products that can be damaged by heat.
